**Europäisches Patentamt**

**European Patent Office**

**Office européen des brevets**

(11) Publication number: **0 250 055**
**B1**

## (12) EUROPEAN PATENT SPECIFICATION

(45) Date of publication of patent specification: **30.01.91**

(21) Application number: **87201169.7**

(22) Date of filing: **17.06.87**

(51) Int. Cl.⁵: **A 01 B 33/14, A 01 B 33/06**

(54) **A soil cultivating machine.**

(30) Priority: **18.06.86 NL 8601573**

(43) Date of publication of application:
**23.12.87 Bulletin 87/52**

(45) Publication of the grant of the patent:
**30.01.91 Bulletin 91/05**

(84) Designated Contracting States:
**AT DE FR GB IT NL**

(56) References cited:
**FR-A-2 425 793**
**FR-A-2 531 600**
**GB-A- 472 176**
**GB-A-2 151 443**
**US-A-1 802 385**

(73) Proprietor: **C. van der Lely N.V.**
**Weverskade 10 P.O. Box 26**
**NL-3155 ZG Maasland (NL)**

(72) Inventor: **Van der Lely, Cornelis**
**7, Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a soil cultivating machine comprising a plurality of soil working members which are rotatable about upwardly extending axes and include at least one carrier with at least one soil working element mounted thereon, the connecting part of the soil working element being mounted by means of a bolt and projections being provided on both sides of the bolt for the purpose of locking said connecting part of said soil working element.

A soil cultivating machine of the kind set forth is known from the British Patent Specification 472.176. In this known construction a tine is provided with a shank that is formed at at least one edge with a flange adapted to engage an edge of the bracket to which it has to be secured. In this known construction the flange over its whole length and width has to abut against the bracket, otherwise the securing by at least one bolt cannot be effectively. In other words the known construction requires an exact fitting, which makes it rather costly.

The invention now has for its object to provide a tine mounting, which can be achieved by means of a cheaper construction and nevertheless provides a reliable connection.

In accordance with the invention there is provided a soil cultivating machine of the kind set forth, whereby the projections are located diametrically opposite each other above and below the bore for accommodating the bolt, the said projections being in the form of a boss of a rectangular cross-section which reaches to the upper and lower side respectively of the connecting part and is bevelled at the side facing the bore. By means of this provision without the necessity of an exact fitting a reliable connection is achieved, which connection has a considerable resistance against the forces which are exerted on same during rotation of the soil working members.

The French Patent Application 2.531.600 relates to a tine mounting whereby there is provided a bracket for the shank of a tine which bracket as well as the shank is provided with a plurality of projections that are arranged in side-by-side relationship and requires a manufacturing with considerable precision which makes this construction rather expensive. Moreover there has to be a full "clamping" cooperation between the various projections because otherwise the tine will loosen itself during operation.

The UK Patent Application 2.151.443 relates to a tine mounting, whereby a bolt is inserted in a bore for clamping a shank of a tine to a carrier. The head of the bolt lies between two projections which are arranged on top of a clamping piece by means of which the shank is clamped against the carrier.

For a better understanding of the present-invention and to show how the same may be carried into effect, reference will now be made, by way of example, to the accompanying drawings, in which:

Figure 1 is a plan view of a soil cultivating machine comprising a construction according to the invention;

Figure 2 is, to an enlarged scale, a view taken along the line II-II in Figure 1;

Figure 3 is a view taken in the direction of the arrow III in Figure 2;

Figure 4 is a view taken on the line IV-IV in Figure 2;

Figure 5 is a view taken on the line V-V in Figure 4;

Figure 6 is a view taken on the line VI-VI in Figure 3;

Figure 7 is a view taken on the line VII-VII in Figure 3;

Figure 8 is a view taken on the line VIII-VIII in Figure 3;

Figure 9 is a view taken on the line IX-IX in Figure 3;

Figure 10 is a view taken on the line X-X in Figure 3;

Figure 11 is a view taken on the line XI-XI in Figure 3;

Figure 12 is a view in accordance with Figure 3 of a second embodiment of a soil working element according to the invention;

Figure 13 is a side elevational view in accordance with Figure 3 of a third embodiment of a soil working element according to the invention;

Figure 14 is a view taken in the direction of the arrow XIV in Figure 13;

Figure 15 is a view in accordance with Figure 2 of a second embodiment of a connection for a soil working element and a fourth embodiment of a soil working element;

Figure 16 is a view taken in the direction of the arrow XVI in Figure 15;

Figure 17 is a view taken on the line XVII-XVII in Figure 15;

Figure 18 is a view taken along the line XVIII-XVIII in Figure 15, and

Figure 19 is a view taken on the line XIX-XIX in Figure 16.

The implement shown in the drawings concerns a soil cultivating machine, in particular one for preparing a seed bed. The machine comprises a box-like frame portion 1 which extends transversely to the direction of operative travel A and in which are supported, spaced apart equidistantly by preferably 25 cms, upwardly, preferably vertically, extending shafts 2 of soil working members 3. Each of the soil working members 3 includes an at least substantially horizontal, preferably cast-steel carrier 4 which is provided on that end of the shaft 2 projecting from the bottom of the frame portion 1. By means of a hub 5 having splines and being positioned in the centre, the carrier 4 is pushed onto the end of the shaft 2, which also includes splines, and is secured thereon by means of a nut 6 adapted to cooperate with thread on the lower end of said shaft. The opposite ends of the carrier 4 are each provided with a connecting part 7 for a soil working element 8, which extends downwardly and, in this embodiment, is designed as a rod-shaped tine.

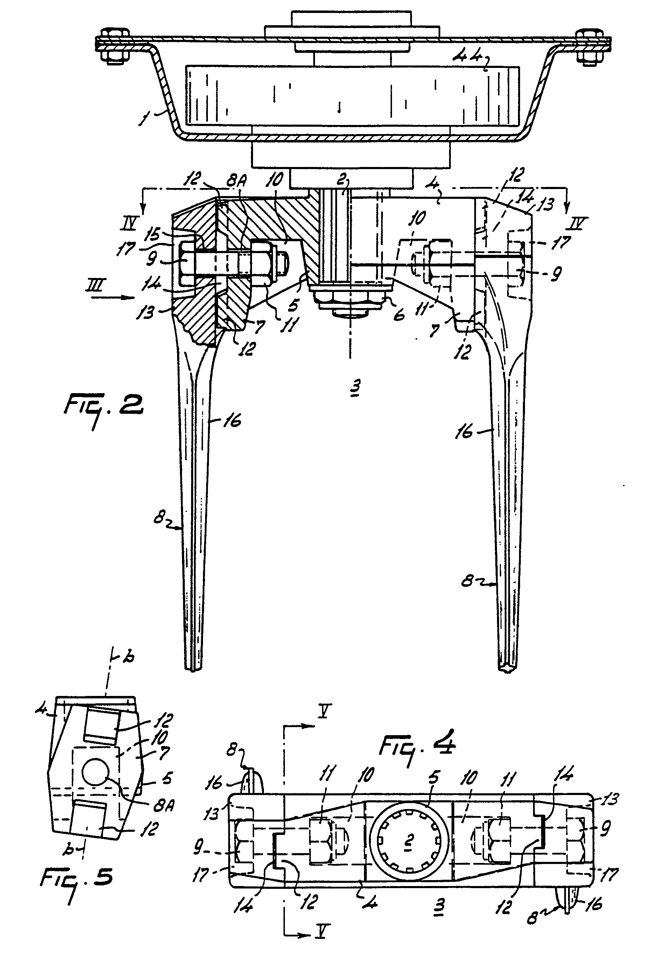

As is apparent from Figure 2, the connecting parts 7 reach to below the hub and are connected thereto by means of an upwardly sloping part at the lowermost side. At its uppermost side the carrier has bevelled faces which, with respect to the direction of rotation B imparted to a soil working member 3 during operation, slope upwardly and rearwardly. Figure 4 is a plan view of the course of the faces in question. In a side view (Figure 5), a connecting part 7 substantially has the shape of a diamond, the longest diagonal of which is directed upwardly and the upper and lower sides are truncated and run parallel to each other. In this situation, the relevant sides extend at a slope to match said faces at the upper side of the carrier. Near its centre, each connecting part 7 of a carrier 4 has a bore 8A for the passing of a bolt 9 for connection of the soil working element 8. The bore 8A ends in a recess 10 located between the hub 5 and the connecting part 7 and wherein fits a nut 11 co-operating with said bolt 9 in such a manner that, when the nut is brought into the recess. it is incapable of rotation. Above and below the bore 8A, each connecting part 7 of the carrier 4 has a projection in the form of a boss 12 which reaches to the upper and lower sides, respectively, of the connecting part and is bevelled at the side facing the bore 8A. The respective bosses 12, which are of a substantially rectangular cross-section, are arranged such that their longitudinal centre lines b are in line with each other and intersect the centre line of the bore 8A, the arrangement being such that, with respect to the direction of rotation B of a soil working member 3, the longitudinal centre lines slope forward and enclose an angle of approximately 8° with a plane through the longitudinal centre line of the carrier 4 and the axis of rotation a of a soil working member 3. Each soil working element 8, provided on a carrier 4, comprises a connecting part 13 which at the side facing the carrier 4 has a slotted recess 14 including a bore 15 for passing the bolt 9. The centre line of the slotted recess 14 is located in the extension of the longitudinal centre line of the active part 16 of the soil working element 8 and serves to accommodate the bosses 12 provided on the connecting part 7 of the carrier 4 and located diametrically opposite each other on either side of the bore 8A. That side of the connecting part 13 of a soil working element 8 facing away from the carrier 4 has a recess 17 to accommodate the head of the bolt 9. The upper side of the connecting part 13 is bevelled, the outer side being at a lower level than the inner side (Figure 2). The bevelled portion adjoins a bevelled portion at the upper side of the connecting part 7 of the carrier 4. The connecting part 13 of a soil working element 8 has, as is apparent from Figure 2, a height which corresponds to the height of the connecting part 7 of the carrier 4, as a result of which there is obtained a substantially full intimate contact between the two connecting parts. The bore 15 and the recess 17 in the connecting part 13 of the soil working element 8 are located symmetrically with respect to the centre of a regular hexagon (Figure 3). From a point at the level of the centre of the regular hexagon, the connecting part 13 tapers downwardly and merges into the active part 16 of the soil working element 8. From its connection to the connecting part 13, the active part 16 of the tine tapers towards its free end via a profile which is shown in further detail by means of the cross-sectional views of Figures 8 to 11. The longitudinal centre line of the active part is located in the extension of the longitudinal centre lines of the recess 17 so that said active part is arranged with some drag relative to the direction of rotation B.

Figure 12 illustrates an embodiment of a soil working element 18 which in a similar way as the soil working element 8 of the preceding embodiment is mounted on a carrier 4; however, the active part 19 of the soil working element 18, which soil working element is also designed as a rod-shaped tine, has at its lower side a drop-shaped, bulged-out portion 20 which, relative to the direction of rotation B of a soil working member 3. is located at the rear side and extends upwardly over one quarter of the length of the active part. As has been found in practice, by means of said drop shaped, bulged-out portion 20 it is possible to obtain a significant increase of the wear-resistance of the active part of the soil working element.

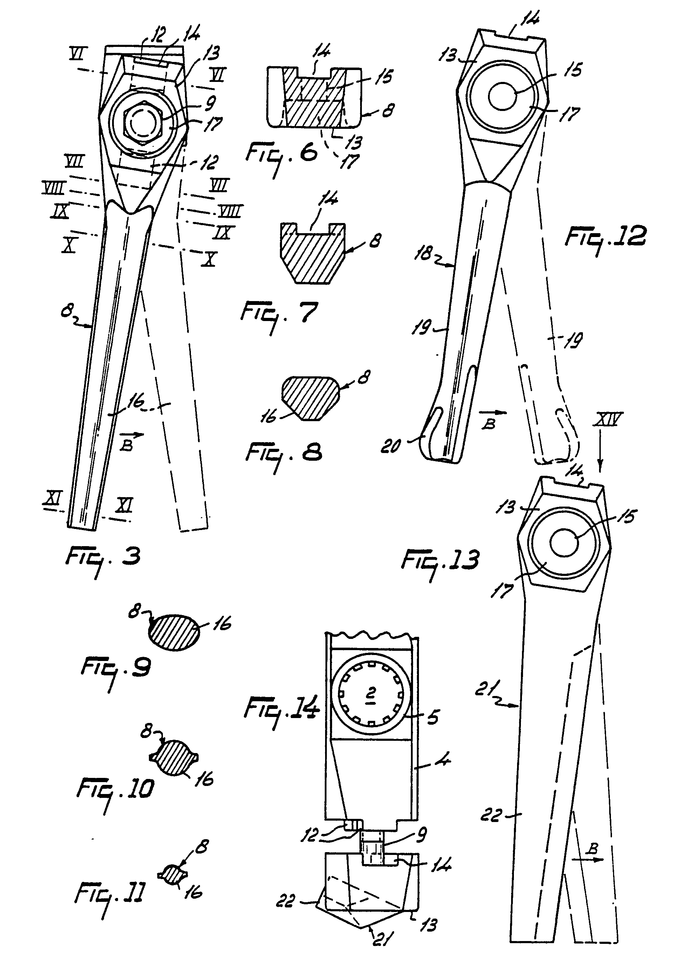

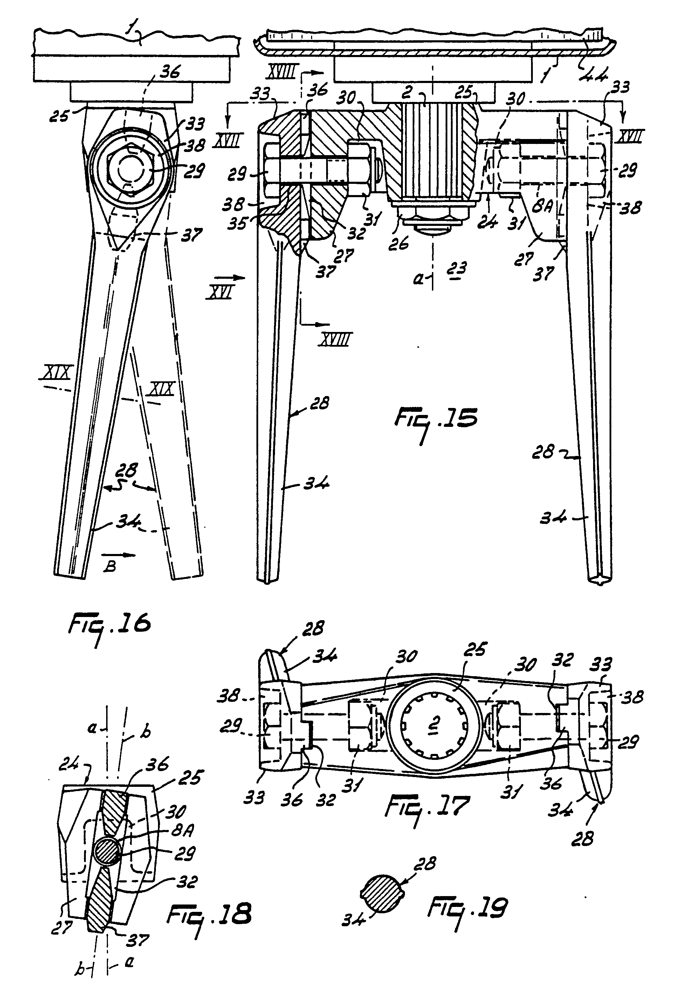

Figures 13 and 14 illustrate an embodiment comprising a soil working element 21. Like the soil working elements of the preceding embodiments, the soil working element 21 is provided in an identical manner on a carrier 4. However, the active part 22 of the soil working element 21 is knife-shaped and is rotated in such a manner about its longitudinal centre line that its sharpened front side is at a greater distance from the axis of rotation a of the soil working member 3 than its rear side (Figure 14).

Relative to the direction of rotation B of a soil working member 3, the front side of the active part 22 is arranged with some drag, whereby this front side includes an angle of approximately 8° with a plane through the longitudinal centre line of the carrier and the axis of rotation of the soil working member. The rear side of the active part 22 is bevelled to a lesser extent, as is apparent from Figure 13.

Figures 15 to 18 illustrate an embodiment of a construction according to the invention, wherein each of the soil working members 23 comprises an at least substantially horizontal carrier 24 mounted on that end of the shaft 2 projecting from the bottom of the frame portion 1, said carrier preferably being made of cast steel. By means of a hub 25 having splines, the carrier 24 is pushed onto the end of the shaft 2, which end also has splines, and is secured thereto by means of a nut 26 adapted to co-operate with thread on the lower end of the shaft. The opposite ends of the carrier 24 each include a connecting part 27 for a soil working element 28, which extends downwardly and, in the embodiment shown, is designed as a rod-shaped tine. As is apparent from Figure 15, the connecting parts 27 extend to under that portion of the carrier 24 located between the ends. i.e. over a distance equal to approximately half the carrier height. In a side view (Figure 18), the connecting parts 27 are of a construction corresponding to that of the connecting part 7 of the carrier 4 of the previous embodiments. Each connecting part 27 is provided near its mid-point with a recess or bore 38 for a bolt 29, which bore ends in a recess 30 wherein fits a nut 31 co-operating with said bolt, the arrangement being such that the nut is incapable of rotation in the recess. At the side facing away from the hub 25, each connecting part 27 has a slotted recess 32 encompassing the bore 38 and extending from the lower end to the upper end of said connecting part (Figure 18). The longitudinal centre line b of the recess 32 includes an angle of approximately 8° with a plane through the longitudinal centre line of the carrier 24 and the axis of rotation a of a soil working member (Figures 18 and 16). At its upper side, a soil working member 28 has a connecting part 33 which, as is apparent from Figure 16, is substantially of an oval shape, the upper side of which part is bevelled and the lower side merges via a tapering portion into a downwardly extending active part 34 whose cross-section, which is shown in Figure 19, tapers downwardly, taken in a direction from the top to the bottom. At its front and rear sides, the active part 34 is provided with a rib extending over at least substantially the entire length thereof. At the side facing the carrier 24, the connecting part 33 is provided with projections, on either side of a bore 35 for the bolt 29, in the form of bosses 36 and 37 of a rectangular cross-section. The upper boss 36 extends to the upper side of the connecting part and at its bottom side tapers into two directions which are perpendicular to each other (Figures 15 and 18) to near the bore 35. The lower boss 37 varies at its top side in a manner corresponding to that at the bottom side of the boss 36. The bottom side tapers in the same way but over a shorter distance, which tapering portion projects to beyond the recess 32 in the connecting part 27 of the carrier 24 (Figures 15 and 18). This is advantageous when mounting the soil working element. At the side facing away from the carrier 24, the connecting part 33 of the soil working element 28 has a circular recess 38 in which the head of the bolt 29 is accommodated, which bolt retains the bosses 36 and 37 in the recess 32 of the connecting part 27 of the carrier 24. Also in this embodiment, the longitudinal centre line of the active part is located in the extension of the longitudinal centre lines of the bosses 36, 37 and the slotted recess 32, respectively.

As is apparent from Figure 16, the connecting part 33 of the soil working element 28 has a rounded top side, so that material is prevented from sticking and being carried along during operation. The ends of the box-like frame portion 1 are closed by plates 39 which extend upwardly and at least substantially parallel to the direction of operative travel A. Near its front side, each of the plates 39 has a pivot 40 about which an arm 41, which extends rearwardly along the plates, is pivotal, said arm being adjustable to and lockable in a plurality of positions by means of an adjusting device 42 at the rear side of the plates 39. A freely rotatable roller 43 is disposed behind the soil working members 3 between the ends of the arms 41. Inside the box-like frame portion 1, each of the shafts 2 of a soil working member 3 is provided with a pinion 44, the arrangement being such that pinions provided on the shafts of adjacent soil working members are in driving connection with each other. Near the centre, the shaft of a soil working member is extended and by means of this extension reaches to into a gear box 45, inside which the extension is in driving connection via a conical gear wheel transmission and a speed variator 46 located at the rear side of the gear box with a shaft 47 which extends in the direction of operative travel A, projects at the front side from said gear box, and can be coupled to the power take-off shaft of a tractor via an intermediate shaft 48. Near its front side. the box-like frame portion has a trestle 49 which includes a three-point connection for coupling to the three-point lifting hitch of a tractor.

The implement described in the foregoing operates as follows:

During operation, the machine is connected by means of the trestle 49 to the three-point lifting hitch of a tractor and the whole can be moved by means of the tractor in a direction indicated by the arrow A.

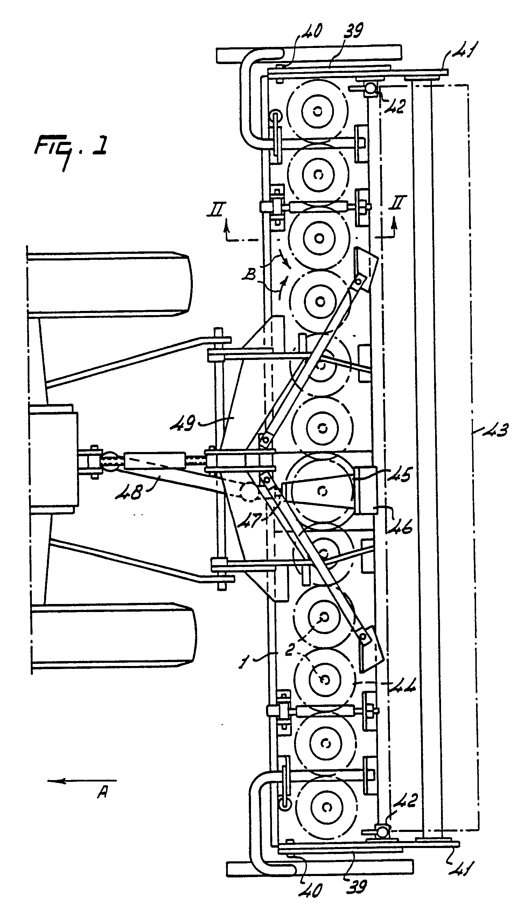

Hereby each of the soil working members 3 can be given a rotary motion from the power take-off shaft of the tractor via the intermediate shaft 48 and the above-described transmission, the arrangement being such that adjacent soil working members rotate in opposite directions as indicated by the arrow B in Figure 1. Thereby the soil working elements of adjacent soil working members cultivate at least adjoining strips of soil. The above-described design of the soil working elements, the carriers and the connection to the carrier provides a simple production feature and a simple connection. On connection, the respective nuts 11 and 31 can be accommodated in the recesses 10 and 31, respectively, in which said nuts fit tightly and accurately, so that the fixation of the respective bosses 12 and 36, 37 in the respective slotted recesses 14 and 32 can be effected rapidly by means of the respective bolts 9 and 29. The specific design of both the connecting part of the soil working element and the connecting parts at the ends of the carrier provides a reliable fixation of the soil working element.

**Claims**

1. A soil cultivating machine comprising a plurality of soil working members (3) which are rotatable about upwardly extending axes (2) and include at least one carrier (4) with at least one soil working element (8, 18, 21, 28) mounted thereon, the connecting part (13, 33) of the soil working element (8, 18, 21, 28) being mounted by means of a bolt (9, 29) and projections (12, 36) being provided on both sides of the bolt (9, 29) for the purpose of locking said connecting part of said soil working element (8, 18, 21, 28), characterized in that the projections (12, 36) are located diametrically opposite each other above and below the bore (8A) for accommodating the bolt (9, 29), the said projections (12, 36) being in the form of a boss of a rectangular cross-section, which reaches to the upper and lower sides, respectively of the connecting part and is bevelled at the side facing the bore (8A).

2. A soil cultivating machine as claimed in claim 1, characterized in that a centre line (b) of the projections (12, 36) includes an angle of approximately 8° with a plane through the longitudinal centre line of the carrier (4) and the axis of rotation (a) of a soil working member (3).

3. A soil cultivating machine as claimed in claim 1 or 2, characterized in that the longitudinal centre lines (b) of the projections (12, 36) are aligned with the extension of the longitudinal centre line of the active part (16, 19, 22, 34) of the soil working element (8, 18, 21, 28).

4. A soil cultivating machine as claimed in any one of the preceding claims, characterized in that the projections (12, 36) are provided either on a connecting part (13, 33) of the soil working element (8, 18, 21, 28) or on a connecting part (7, 27) of the carrier (4, 24).

5. A soil cultivating machine as claimed in any one of the preceding claims, characterized in that the projections (12, 36) co-operate with a slotted recess (14, 32).

6. A soil cultivating machine as claimed in claim 5, characterized in that the slotted recess (14, 32) extends over the entire length of a connecting part (7, 27, 13, 33).

7. A soil cultivating machine as claimed in any one of the preceding claims, characterized in that the connecting part (13, 33) of a soil working element has a recess (17, 38) to accommodate the head of the bolt (9, 29).

**Patentansprüche**

1. Bodenbearbeitungsmaschine mit mehreren Bodenbearbeitungsgliedern (3), die um aufwärts gerichtete Achsen (2) drehbar sind und mindestens einen Träger (4) mit mindestens einem Bodenbearbeitungselement (8, 18, 21, 28) aufweisen, das am Träger befestigt ist, wobei das Verbindungsteil (13, 33) des Bodenbearbeitungselementes (8, 18, 21, 28) mittels eines Bolzens (9, 29) befestigt ist und beiderseits des Bolzens (9, 29) Vorsprünge zur Lageänderung des Verbindungsteiles des Bodenbearbeitungselementes (8, 18, 21, 28) vorgesehen sind, dadurch gekennzeichnet, daß die Vorsprünge (12, 36) oberhalb und unterhalb der Bohrung (8A) zur Aufnahme des Bolzens (9, 29) einander diametral gegenüberliegen, und daß die Vorsprünge (12, 36) die Form eines Zapfens mit rechteckigem Querschnitt haben, der bis zur oberen bzw. unteren Seite des Verbindungsteiles reicht und an der der Bohrung (A) zugekehrten Seite schräg verläuft.

2. Bodenbearbeitungsmaschine nach Anspruch 1, dadurch gekennzeichnet, daß eine Mittellinie (b) der Vorsprünge (12, 36) einen Winkel von etwa 8° mit einer Ebene einschließt, die durch die Längsmittellinie des Trägers (4) und die Drehachse (a) eines Bodenbearbeitungsgliedes (3) geht.

3. Bodenbearbeitungsmaschine nach Anspruch 1 oder 2, dadurch gekennzeichnet, daß die Längsmittellinien (b) der Vorsprünge (12, 36) zur Verlängerung der Längsmittellinie des Arbeitsteiles (16, 19, 22, 34) des Bodenbearbeitungselementes (8, 18, 21, 28) fluchtend ausgerichtet ist.

4. Bodenbearbeitungsmaschine nach einem der vorhergehenden Ansprüche, dadurch gekennzeichnet, daß die Vorsprünge (12, 36) entweder an einem Verbindungsteil (13, 33) des Bodenbearbeitungselementes (8, 18, 21, 28) oder an einem Verbindungsteil (7, 27) des Trägers (4, 24) vorgesehen sind.

5. Bodenbearbeitungsmaschine nach einem der vorhergehenden Ansprüche, dadurch gekennzeichnet, daß die Vorsprünge (12, 36) mit einer schlitzförmigen Ausnehmung (14, 32) zusammenwirken.

6. Bodenbearbeitungsmaschine nach Anspruch 5, dadurch gekennzeichnet, daß sich die schlitzförmige Ausnehmung (14, 32) über die ganze Länge eines Verbindungsteiles (7, 27, 13, 33) erstreckt.

7. Bodenbearbeitungsmaschine nach einem der vorhergehenden Ansprüche, dadurch gekennzeichnet, daß das Verbindungsteil (13, 33) eines Bodenbearbeitungselementes eine Ausnehmung (17, 38) zur Aufnahme des Kopfes des Bolzens (9, 29) aufweist.

**Revendications**

1. Machine pour cultiver le sol comprenant unepluralité d'organes de travail du sol (3) pouvant tourner autour d'axes (2) s'étendant vers le haut et qui comprennent au moins un bras porteur (4) avec au moins un élément (8, 18, 21, 28) de travail du sol monté sur ce bras, la partie de raccordement (13, 23) de l'élément (8, 18, 21, 28) de travail du sol étant montée au moyen d'un boulon (9, 29) et des saillants (12, 36) étant prévus sur chacun des deux côtés du boulon (9, 29) pour bloquer ladite partie de raccordement dudit élément (8, 18, 21, 28) de travail du sol, caractérisée en ce que les saillants (12, 36) sont diamétralement opposés l'un à l'autre au dessus et au dessous de l'alésage (8A) destiné à recevoir le boulon (9, 29), lesdits saillants (12, 36) étant sous la forme d'un bossage de section rectangulaire s'étendant respectivement jusqu'aux côtés supérieur et inférieur de la partie de raccordement, ce bossage étant chanfreiné sur son côté faisant face à l'alésage (8A).

2. Machine pour cultiver le sol selon la revendication 1, caractérisée en ce qu'un axe (b) des saillants (12, 36) form un angle d'environ 8° avec un plan passant par l'axe longitudinal du bras porteur (4) et avec l'axe de rotation (a) d'un organe de travail du sol (3).

3. Machine pour cultiver le sol selon la revendication 1 ou 2, caractérisée en ce que les axes longitudinaux (b) des saillants (12, 36) sont alignés avec le prolongement de l'axe longitudinal de la partie active (16, 19, 22, 34) de l'élément (8, 18, 21, 28) de travail du sol.

4. Machine pour cultiver le sol selon l'une quelconque des revendications précédentes, caractérisée en ce que les saillants (12, 36) sont prévus soit sur une partie de raccordement (13, 33) de l'élément (8, 18, 21, 28) de travail du sol, ou bien sur une partie de raccordement (7, 27) du bras porteur (4, 24).

5. Machine pour cultiver le sol selon l'une quelconque des revendications précédentes, caractérisée en ce que les saillants (12, 36) coopèrent avec un renfoncement (14, 32) en forme d'encoche.

6. Machine pour cultiver le sol selon la revendication 5, caractérisée en ce que le renfoncement (14, 32) en forme d'encoche s'étend sur toute la longueur d'une partie de raccordement (7, 27, 13, 33).

7. Machine pour cultiver le sol selon l'une quelconque des revendications précédentes, caractérisée en ce que la partie de raccordement (13, 33) d'un élément de travail du sol a un renfoncement (17, 38) pour loger la tête du boulon (9, 29).

FIG. 1

FIG. 2

FIG. 4

FIG. 5

VI

12    14

13

VI

9

17

12

VII

VIII

IX

X

VII

VIII

IX

X

8

16

B

XI

XI

Fig. 3

14

15

8

13

17

Fig. 6

14

8

Fig. 7

8

16

Fig. 8

14

13

15

17

Fig. 12

18

19

19

B

20

14

XIV

13

15

17

Fig. 13

8

16

Fig. 9

8

16

Fig. 10

8

16

Fig. 11

Fig. 14

2

5

4

12

9

14

22

13

21

21

22

B

FIG.15

FIG.16

FIG.17

FIG.18

FIG.19